# EUROPEAN PATENT APPLICATION

(11) **EP 4 145 358 A1**
(43) Date of publication of application: **08.03.2023**
(21) Application number: 22194310.3
(22) Date of filing: 07.09.2022
(51) Int. Cl.: G06N 7/00, G06N 3/08

(54) **SYSTEMS AND METHODS FOR ONBOARD ENFORCEMENT OF ALLOWABLE BEHAVIOR BASED ON PROBABILISTIC MODEL OF AUTOMATED FUNCTIONAL COMPONENTS**

(30) Priority: 07.09.2021 US 202117467942
(71) Applicant: Argo AI, LLC, Pittsburgh, PA 15222 (US)
(72) Inventor: Mercep, Ljubo, 80805 Munich (DE)
(74) Representative: Hofstetter, Schurack & Partner

(57) **Abstract**

Systems and methods comprising: obtaining a probabilistic machine learning model encoded with at least one of following categories of questions for an automated system - a situational question, a behavioral question and an operational constraint relevant question; receiving behavior information specifying a manner in which the automated system was to theoretically behave or actually behaved in response to detected environmental circumstances, and/or perception information indicating errors in a perception of a surrounding environment made by the automated system; performing an inference algorithm using the probabilistic machine learning model to obtain at least one inferred probability that a certain outcome will result based on at least one of the behavior information and the perception information; and causing the automated system to perform a given behavior to satisfy a pre-defined behavioral policy, in response to the at least one inferred probability being a threshold probability.

## Description

### BACKGROUND

### Statement of the Technical Field

The present disclosure relates generally to automated systems. More particularly, the present disclosure relates to implementing systems and methods for onboard enforcement of allowable behavior based on probabilistic model of automated functional components.

### Description of the Related Art

Modern day vehicles have at least one on-board computer and have internet/satellite connectivity. The software running on these on-board computers monitor and/or control operations of the vehicles.

### SUMMARY

The present disclosure concerns implementing systems and methods for operating an automated system. The method comprises performing the following operations, e.g. via a computing device: providing a probabilistic machine learning model encoded with at least one of the following categories of questions for an automated system - a situational question, a behavioral question and an operational constraint relevant question for an automated system; providing (i) behavior information specifying a manner in which the automated system was to theoretically behave or actually behaved in response to detected environmental circumstances or (ii) perception information indicating errors in a perception of a surrounding environment made by the automated system; performing an inference algorithm using the probabilistic machine learning model to obtain at least one inferred probability that a certain outcome will result based on at least one of the behavior information and the perception information; causing the automated system to perform a given behavior (e.g., a driving maneuver and/or capturing data in a shadow mode) to satisfy a pre-defined behavioral policy in response to the at least one inferred probability being a threshold probability; and/or updating the probabilistic machine learning model based on at least one of the behavior information and the perception information. It shall be appreciated that the probabilistic machine learning model and/or the behavior information and/or the perception information may be provided in any suitable manner, for example, it may be sent to the computing device and/or it may be requested or obtained by the computing device. Any of the operations may either be performed directly by the computing device, or at least some of them may be allocated to other computing devices, e.g., by the computing device. Thus, providing any of the components such as the probabilistic machine learning model and/or the behavior information and/or the perception information may comprise receiving the respective components from a data source and/or another computing device and/or obtaining or fetching the respective components from there. Those skilled in the art shall appreciate that the behavior information may be provided as behavior information data and the perception information may be provided as perception information data.

The term "situational question" refers to a question that facilitates an understanding of how probably is it that the automated system is experiencing a given situation at the present time, and/or how probable a certain outcome will result given a current situation of an automated system. The given situation can be described in terms of a perceived environment and/or internal system states. For example, a situational question can include: what is the probability that the automated system is passing at less than fifty centimeters cm from a pedestrian; what is the probability that the automated system is pass close to a pedestrian and wants to accelerate over fifty kilometers per hour; what is the probability that the automated system is perceiving a bicycle with a perception confidence under twenty percent and correcting the initial bicycle detection into an actual motorcycle detection; or what is the probability that the operational requirement or driving management threshold (e.g., stay at least ten feet from a pedestrian) will be violated or exceeded in the immediate future based on a current driving situation. The term "behavioral question" refers to a question that facilitates an understanding of what action(s) would need to be performed by the automated system to provide a certain outcome or eliminate/minimize the chances of an unfavorable outcome. For example, a behavioral question can include what action would reduce the chance of an unfavorable outcome of the current situation. The term "operational constraint relevant question" refers to a question that facilitates an understanding of what actions would lead to (i) violation of an operational policy or rule and/or (ii) exceeding a driving management threshold or other rule. For example, an operational constraint relevant question can include what is the probability that the next sensor update from a given sensor will lead to an avoidance or abrupt maneuver, and/or will the next sensor updates from a given sensor significantly contribute to the probability of initiating a braking or abrupt maneuver.

The automated system can include, but is not limited to, a mobile platform (e.g., an autonomous vehicle) and/or a robotic system (e.g., an autonomous vehicle or an articulating arm). The probabilistic machine learning model can include, but is not limited to, a Bayesian network model with a pre-defined structure or a neural network with learned structure and explicit semantics. The inference algorithm can include, but is not limited to, a junction tree algorithm.

In some scenarios, the computing device is external to the automated system. Additionally or alternatively the computing system may be configured to perform operations to control behaviors of a plurality of automated systems in a fleet. The computing device may perform operations to control the automated system by (i) exchanging the probabilistic machine learning model between a plurality of automated systems and the computing device and (ii) having the computing device issue driving commands.

The systems aspects of the present teachings may each comprise means for performing any of the herein disclosed computer-implemented methods. The implementing systems can for example comprise: a processor; and optionally a computer-readable storage medium comprising programming instructions that cause the processor to implement a method for operating an automated system.
The system may comprise a processor configured (e.g., via programming instructions) to: provide a probabilistic machine learning model encoded with at least one of the following categories of questions for the automated system: a situational question, a behavioral questions and an operational constraint relevant question; provide (e.g. receive or obtain) (i) behavior information specifying a manner in which the automated system was to theoretically behave or actually behaved in response to detected environmental circumstances or (ii) perception information indicating errors in a perception of a surrounding environment made by the automated system; perform an inference algorithm using the probabilistic machine learning model to obtain at least one inferred probability that a certain outcome will result based on at least one of the behavior information and the perception information; and cause the automated system to perform a given behavior to satisfy a pre-defined behavioral policy, responsive to the at least one inferred probability being a threshold probability.
Implementing aspects of the methods described herein may comprise a computer program product, or a computer readable storage medium comprising the computer program, comprising programming instructions which when executed by one or more processors cause any of the processors to: provide a probabilistic machine learning model encoded with at least one of the following categories of questions for the automated system: a situational question, a behavioral question and an operational constraint relevant question; provide (i) behavior information specifying a manner in which the automated system was to theoretically behave or actually behaved in response to detected environmental circumstances or (ii) perception information indicating errors in a perception of a surrounding environment made by the automated system; perform an inference algorithm using the probabilistic machine learning model to obtain at least one inferred probability that a certain outcome will result based on at least one of the behavior information and the perception information; and cause the automated system to perform a given behavior to satisfy a pre-defined behavioral policy, responsive to the at least one inferred probability being a threshold probability.
The present disclosure is also concerned with a probabilistic machine learning model, or a data storage medium storing the model, as generated by the described method.
Likewise, the use of a probabilistic machine learning model for operating and/or controlling an automated system according to any embodiment of the described method is also anticipated.

### BRIEF DESCRIPTION OF THE DRAWINGS

The present solution will be described with reference to the examples shown in the following drawing figures, in which like numerals represent like items throughout the figures.
FIG. 1 is an illustration of an illustrative system.
FIG. 2 is an illustration of an illustrative architecture for a vehicle.
FIG. 3 is an illustration of an illustrative computing device.
FIG. 4 provides a block diagram that is useful for understanding how trajectory-based preservation of vehicles is achieved in accordance with the present solution.
FIGS. 5A-5C (collectively referred to herein as "FIG. 5") provides a flow diagram of an illustrative method for operating a mobile platform.
FIG. 6 provides a flow diagram of an illustrative method for generating inferred probability(s) that certain outcome(s) will result based on various information.
FIGS. 7 and 8 each provides a flow diagram of an illustrative method for operating an automated system (e.g., a mobile platform).
FIG. 9 provides a flow diagram of an illustrative method for operating a system in a shadow mode.

### DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process. In some cases, at least some of the processors may be remotely located, for example, at least some of the processors may be a part of one or more remote servers and/or one or more cloud-computing services.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

In this document, when terms such as "first" and "second" are used to modify a noun, such use is simply intended to distinguish one item from another, and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

Real-time prediction of actions by drivers of other vehicles and pedestrians is a challenge for on-road semi-autonomous or autonomous vehicle applications. Such real-time prediction is particularly challenging when the drivers and/or pedestrians break traffic rules.

Autonomous vehicle perception relies on measurements from various sensors (e.g., cameras, LiDAR systems, radar systems and/or sonar systems). Every sensor measurement changes the probabilities of existence of objects and articles in a specific space at a specific time. Between the sensor measurements, state-of-the-art autonomous driving stacks use tracking or filtering to interpolate or to predict future measurements. Models used for this prediction are based on, for example, kinematics (e.g., vehicle kinematic models) and object's contextual information (e.g., map data). Models built with such utilitarian predictive designs (where perception is decoupled from vehicle action space) are not able to efficiently answer simple and/or complex situational and behavioral questions (e.g., what is the probability that the operational requirement or a driving management requirement will be violated in the immediate future based on the current driving situation and based on statistics collected by a fleet of vehicles, and/or what action would reduce the chance of an unfavorable outcome of the current situation) and/or operational constraint relevant questions (e.g., what is the probability that the next sensor update from sensor X will lead to an avoidance maneuver, and/or will the next N sensor updates from sensor Y significantly contribute to the probability of initiating a braking maneuver). Self-driving product improvements depend on a manual issue annotation system, instead of automatically collecting information of produce performance and using that information directly to improve management of vehicle driving and overall vehicle operation. The ability to answer simple questions enables (1) recording important sensor or internal system data to improve automated system behavior using a long improvement cycle (e.g., one which includes gathering data from a fleet of automated systems and distributing an improved probabilistic machine learning model to the fleet) and (2) keeping track of how good the automated system performs in specific situations of interest to facilitate passing the gates needed to automated system product launch.

As an example, consider a situation where an autonomous vehicle is approaching the end of an empty tunnel. The camera might be blinded by the sunlight, while the LiDAR data will confirm that there are no obstacles in front of the vehicle. The question "what is the probability that braking needs to be initiated in 3 seconds" is connected to the current probability of a LiDAR vehicle detection at the end of the tunnel, sensor fusion mode, braking model, and other system states. Getting the answer to the maneuver question at high frequency (higher than sensor updating rates) requires an efficient representation of probabilistic dependencies, efficient information exchange model and an efficient inference model.

This document describes implementing systems and methods that are directed to addressing the above described problems and/or other issues. The methods involve using a probabilistic machine learning network to model the temporal, causal and statistical dependencies between behavior of different functional components of an automated system. The probabilistic network can include, but is not limited to, a Bayesian network with a pre-defined structure or a neural network with a learned structure and explicit semantics. The functional components can include, but are not limited to, sensor measurement components, object detection components, object tracking and fusion components, prediction components, motion planning components and/or other functional components. Much of the statistical information may already be available in sensor measurement models, neural networks, matrices of a Kalman filter, and/or rules of decision networks. Other statistical information can be derived by system observations and/or by formal analysis. Most of the temporal and causal dependencies in the system are captured in the interface contracts and schedulers captured by the middleware controlling the data and execution flow of system functionals. The execution flow specifies sequences in which operations of functional components are to be performed by the automated system.

Next, the methods involve continuously updating the information in the nodes of the probabilistic machine learning model as (i) new sensor information is generated by system components, (ii) objects and articles are detected, and/or (iii) the automated system reacts to the detected objects/articles. Any exposed system state can be used to update the information in the nodes of the probabilistic machine learning model. The probabilistic machine learning model is configured to reflect the complete knowledge about the environment and the automated system at any given moment. The nodes of the probabilistic machine learning network can run locally at the automated system.

The methods then continue with encoding a set of questions in the probabilistic network nodes. The questions of the set may comprise questions that should be answered with high frequency and/or on-demand with low latency. These questions can be defined in the form of queries which are placed on the probabilistic machine learning model. The questions can be based on worst-case scenarios for the automated system and/or ordered by significance. For example, the following scenarios are ordered from most significant to least significant: a scenario in which an accident takes place; a scenario where a maneuver is necessary; and a scenario in which passenger comfort and comfort of other participants is significantly impacted. The questions may also contain a specification of severity or level of harm of different outcomes or answers.

Subsequently, the methods involve performing an inference algorithm using the probabilistic machine learning model to obtain inferred probabilities that certain outcomes (e.g., unfavorable outcomes) will result given current circumstances of the automated system and a surrounding environment. The probabilities are inferred from machine learned information for answering the questions which were encoded in the probabilistic network nodes. The questions are answered by performing inference at locations of the implemented probabilistic machine learning model in which the computational cost for the inference is the lowest. The inference algorithm (e.g., a junction tree algorithm) is adapted or configured to consider all information sources (e.g., perform exact inference) or to marginalize away information sources which do not contribute significantly to the result of the query using approximate interference. The inference algorithm accounts for the local availability of the information which has the biggest contribution to the inference and the frequency of the information updates. The inference algorithm can furthermore identify which potential future information results in particular outcomes for the automated system (e.g., the worst outcome for each question encoded in the probabilistic machine learning model). For example, the inference algorithm can predict that the automated system will begin a maneuver in the case that the next three object detections based on LiDAR data would have a high detection confidence. Such future hypothesis analysis is crucial for rewarding automated system behaviors which lead to a more desirable and/or less dangerous future state.

The results of performing the interference algorithm are then provided to higher-level system components. The information gained from performance of the inference algorithms (e.g., braking will be needed if the upcoming three LiDAR measurements generate at least two object detections in front of an autonomous vehicle) can be used to proactively reduce the automated system's speed or otherwise change the automated system performance or behavior in order to move the automated system into a system state which has a higher number of more probable positive, desirable or allowable future outcomes. One way this can be achieved is to measure the situation distance (using the distance metric between different situations represented in the probabilistic graph) between the current situation, the undesirable situation and the set of desirable situations, and to actively change the automated system's behavior in order to arrive at low distance desirable situations. Rewards can be balanced with automated system mission/goal-based rewards to avoid the simple solution in which the automated vehicle always moves slowly or stops moving to maximize desirable or allowed future outcomes.

The higher-level system components can include, but are not limited to, a system trajectory planning component. In autonomous vehicle applications, the system trajectory planning component can implement a method for trajectory-based preservation of the vehicle. This method involves: generating a vehicle trajectory for the vehicle that is in motion; detecting an object within a given distance from the vehicle; generating at least one possible object trajectory for the object which was detected; performing an inference algorithm to obtain inferred probabilities that next sensor information will lead to particular outcome(s); using the vehicle trajectory, at least one possible object trajectory, and/or the inferred probabilities to determine whether there is a threshold probability that a collision will occur between the vehicle and the object; and modifying the vehicle trajectory when a determination is made that there is the threshold probability that the collision will occur.

### Illustrative Systems

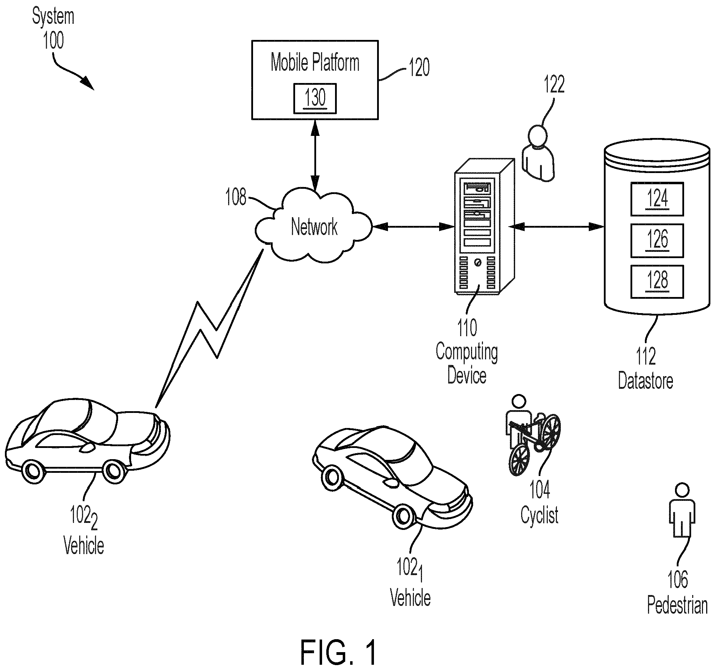

Referring now to FIG. 1, there is provided an illustration of an illustrative system **100** implementing the present solution. System **100** comprises a mobile platform **120** communicatively coupled to a computing device **110** via a network **108** (e.g., the Internet and/or cellular network). The mobile platform **120** is configured to generate sensor data **124.** The mobile platform can include, but is not limited to, a land vehicle (as shown in FIG. 1), an aircraft, a watercraft, a subterrene, or a spacecraft. The sensor data **124** can include, but is not limited to, images, LiDAR datasets, radar data and/or sonar data. The sensor data **124** is communicated from the mobile platform **120** to the computing device **110** for processing and/or storage in datastore **112.**

A user **122** of the computing device **110** can perform user-software interactions to (i) manually define a structure of a probabilistic machine learning model, (ii) access the sensor data **124** and/or (iii) use the sensor data to generate training data set(s) **126** for the probabilistic machine learning model **128.** The probabilistic machine learning model can include, but are not limited to, a Bayesian network model with a pre-defined structure or a neural network with a learned structure and explicit semantics.

The training data set(s) **126** is(are) then stored in datastore **112** (e.g., a database) and/or used by the computing device **110** during a training process to train the probabilistic machine learning model **128** to, for example, (i) generate inferred probabilities that unfavorable outcome(s) will result given current circumstances of an automated system and/or surrounding environment and/or (ii) generate measurement (distance) values representing amounts of change required to transition from current situations to pre-defined theoretical situations. The unfavorable outcomes can include, but are not limited to, a collision or a driving policy violation. A driving policy defines a course of action that is to be taken by an automated system. For example, a driving policy can require that the automated system stay a certain distance (e.g., at least ten feet) from any pedestrian, and/or require that passenger always have a given level of comfort. The driving policy is violated when the automated system comes too close to a pedestrian and/or causes the passenger to have an undesirable level of comfort. The present solution is not limited to the particulars of this example.

Once trained, the probabilistic machine learning model **128** is deployed on the other mobile platforms such as vehicle **102₁.** Vehicle **102₁** can travel along a road in a semi-autonomous or autonomous manner. Vehicle **102₁** is also referred to herein as an Autonomous Vehicle (AV). The AV **102₁** can include, but is not limited to, a land vehicle (as shown in FIG. 1), an aircraft, a watercraft, a subterrene, or a spacecraft. AV **102₁** is generally configured to use the trained probabilistic machine learning model **128** to facilitate improved system trajectory planning.

In some scenarios, the probabilistic machine learning model **128** is deployed on a computing device external to the mobile platforms (e.g., computing device **110**). This way, the network can run with more computational and storage resources, and the network can be used to remotely coordinate the operation of a fleet of mobile platforms, in order to maximize different fleet goals. These goals can be providing maximal passenger comfort on certain information routes, or using a subset of the fleet to gather data from areas where the fleet performed poorly in the past or where the fleet has not driven before.

The system trajectory planning can involve: generating a vehicle trajectory for the vehicle **102₁** that is in motion; detecting an object (e.g., vehicle **102₂**, cyclist **104** or pedestrian **106)** within a given distance from the vehicle **102₁;** generating at least one possible object trajectory for the object which was detected; performing an inference algorithm to obtain inferred probabilities that next sensor information will lead to particular outcome(s); using the vehicle trajectory, at least one possible object trajectory, and/or the inferred probabilities to determine whether there is a threshold probability that a collision will occur between the vehicle **102₁** and the object; and modifying the vehicle trajectory when a determination is made that there is the threshold probability that the collision will occur.

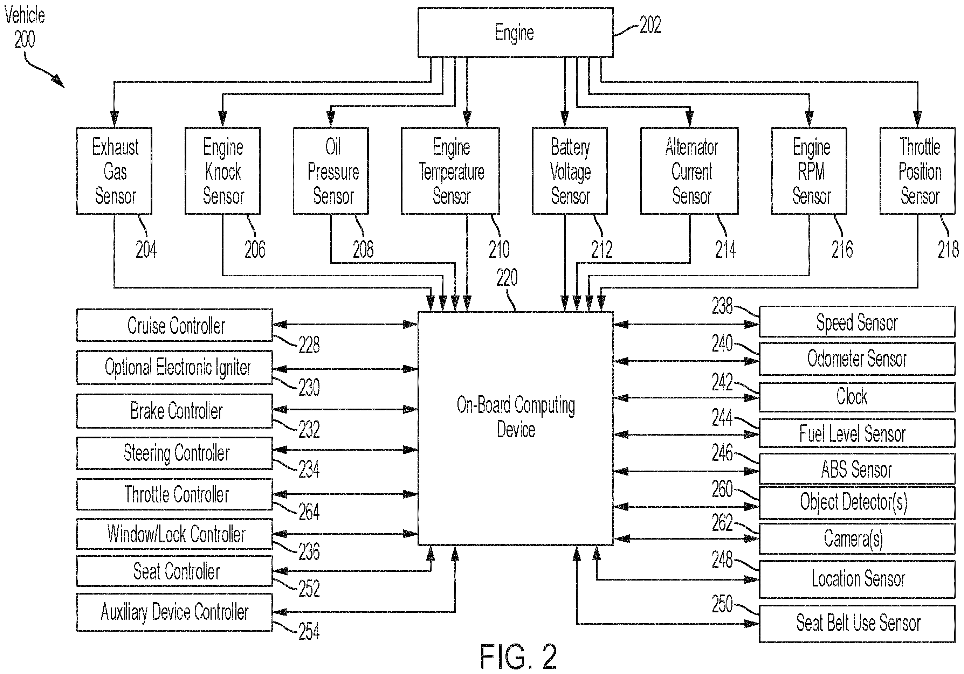

Referring now to FIG. 2, there is provided an illustration of an illustrative system architecture for a mobile platform **200.** Mobile platforms **102₁, 102₂** and/or **120** of FIG. 1 can have the same or similar system architecture as that shown in FIG. 2. Thus, the following discussion of mobile platform **200** is sufficient for understanding mobile platform (s) **102₁, 102₂**, **120** of FIG. 1.

As shown in FIG. 2, the mobile platform **200** includes an engine or motor **202** and various sensors **204-218** for measuring various parameters of the mobile platform. In gas-powered or hybrid mobile platforms having a fuel-powered engine, the sensors may include, for example, an engine temperature sensor **204,** a battery voltage sensor **206,** an engine Rotations Per Minute (RPM) sensor **208,** and a throttle position sensor **210.** If the mobile platform is an electric or hybrid mobile platform, then the mobile platform may have an electric motor, and accordingly will have sensors such as a battery monitoring system **212** (to measure current, voltage and/or temperature of the battery), motor current **214** and motor voltage **216** sensors, and motor position sensors such as resolvers and encoders **218.**

Operational parameter sensors that are common to both types of mobile platforms include, for example: a position sensor **236** such as an accelerometer, gyroscope and/or inertial measurement unit; a speed sensor **238;** and an odometer sensor **240.** The mobile platform also may have a clock **242** that the system uses to determine mobile platform time during operation. The clock **242** may be encoded into an on-board computing device, it may be a separate device, or multiple clocks may be available.

The mobile platform also will include various sensors that operate to gather information about the environment in which the mobile platform is traveling. These sensors may include, for example: a location sensor **248** (e.g., a Global Positioning System (GPS) device); and image-based perception sensors such as one or more cameras **262.** The sensors also may include environmental sensors **268** such as a precipitation sensor and/or ambient temperature sensor. The image-based perception sensors may enable the mobile platform to detect objects that are within a given distance range of the mobile platform **200** in any direction, while the environmental sensors collect data about environmental conditions within the mobile platform's area of travel.

During operations, information is communicated from the sensors to the on-board computing device **220.** The on-board computing device **220** can (i) cause the sensor information to be communicated from the mobile platform to an external device (e.g., computing device **110** of FIG. 1) and/or (ii) use the sensor information to control operations of the mobile platform. For example, the on-board computing device **220** may control: braking via a brake controller **232;** direction via a steering controller **224;** speed and acceleration via a throttle controller **226** (in a gas-powered vehicle) or a motor speed controller **228** (such as a current level controller in an electric vehicle); a differential gear controller **230** (in vehicles with transmissions); and/or other controllers.

Geographic location information may be communicated from the location sensor 248 to the on-board computing device **220,** which may then access a map of the environment that corresponds to the location information to determine known fixed features of the environment such as streets, buildings, stop signs and/or stop/go signals.

In some scenarios, the on-board computing device **220** detects a moving object and performs operations when such detection is made. For example, the on-board computing device **220** may generate one or more possible object trajectories for the detected object, and analyze the possible object trajectories to assess the probability of a collision between the object and the mobile platform if the mobile platform was to follow a given platform trajectory. If the probability does not exceed the acceptable threshold, then the on-board computing device **220** may cause the mobile platform **200** to follow the given platform trajectory. If the probability exceeds an acceptable threshold, the on-board computing device **220** performs operations to: (i) determine an alternative platform trajectory and analyze whether the collision can be avoided if the mobile platform follows this alternative platform trajectory; or (ii) causes the mobile platform to perform a maneuver (e.g., brake, accelerate, or swerve).

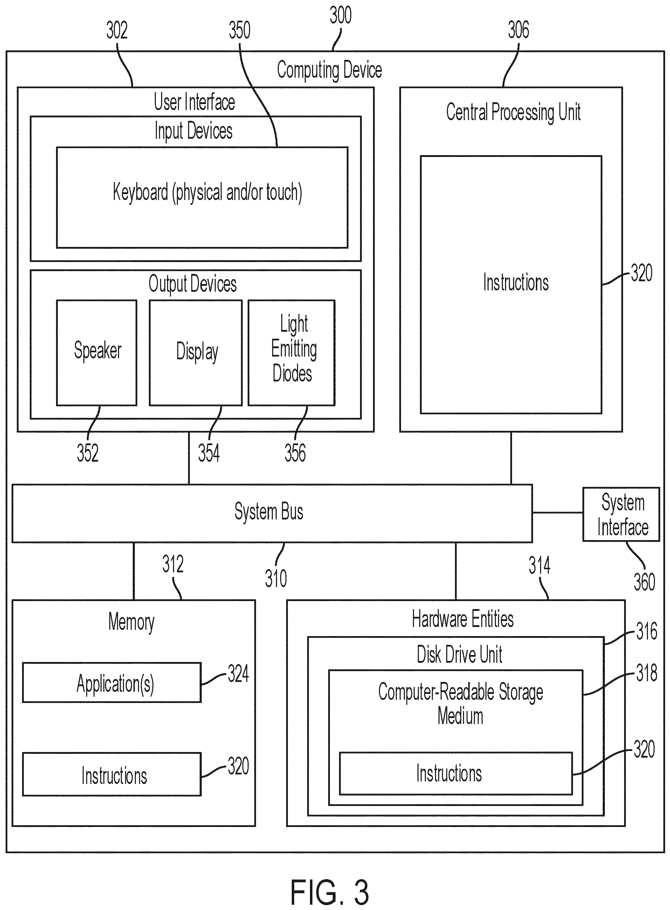

Referring now to FIG. 3, there is provided an illustration of an illustrative architecture for a computing device **300.** The computing device **110** of FIG. 1 and/or the on-board computing device **220** of FIG. 2 is/are the same as or similar to computing device **300.** As such, the discussion of computing device **300** is sufficient for understanding the computing device **110** of FIG. 1 and the on-board computing device **220** of FIG. 2.

Computing device **300** may include more or less components than those shown in FIG. 3. However, the components shown are sufficient to disclose an illustrative solution implementing the present solution. The hardware architecture of FIG. 3 represents one implementation of a representative computing device configured to operate a mobile platform, as described herein. As such, the computing device **300** of FIG. 3 implements at least a portion of the method(s) described herein.

Some or all components of the computing device **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the computing device **300** comprises a user interface **302,** a Central Processing Unit (CPU) **306,** a system bus **310,** a memory **312** connected to and accessible by other portions of computing device **300** through system bus **310,** a system interface **360,** and hardware entities **314** connected to system bus **310.** The user interface can include input devices and output devices, which facilitate user-software interactions for controlling operations of the computing device **300.** The input devices include, but are not limited to, a physical and/or touch keyboard **350.** The input devices can be connected to the computing device **300** via a wired or wireless connection (e.g., a Bluetooth^{®} connection). The output devices include, but are not limited to, a speaker **352,** a display **354,** and/or light emitting diodes **356.** System interface **360** is configured to facilitate wired or wireless communications to and from external devices (e.g., network nodes such as access points, etc.).

At least some of the hardware entities **314** perform actions involving access to and use of memory **312,** which can be a Random Access Memory (RAM), a disk drive, flash memory, a Compact Disc Read Only Memory (CD-ROM) and/or another hardware device that is capable of storing instructions and data. Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the computing device **300.** The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320.** The term "machine-readable media", as used here, also refers to any medium that is capable of storing, encoding or carrying a set of instructions **320** for execution by the computing device 300 and that cause the computing device **300** to perform any one or more of the methodologies of the present disclosure.

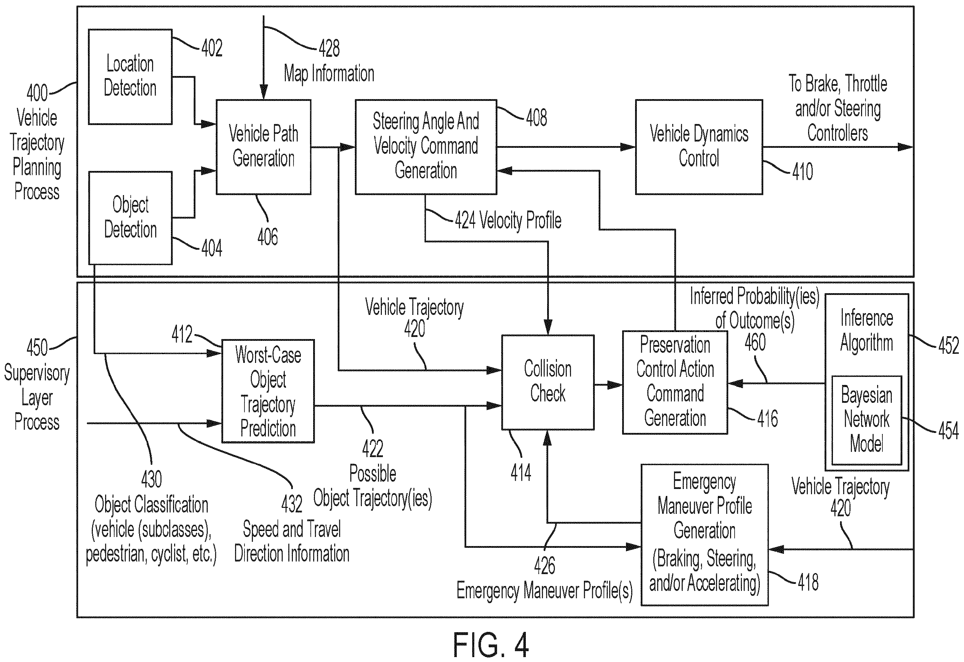

Referring now to FIG. 4, there is provided a block diagram that is useful for understanding how trajectory-based preservation of vehicles is achieved in accordance with the present solution. All of the operations performed in blocks **402-418, 452, 454** can be performed by the on-board computing device of a vehicle (e.g., AV **102i** of FIG. 1).

In block **402,** a location of the vehicle is detected. This detection can be made based on sensor data output from a location sensor (e.g., location sensor **248** of FIG. 2) of the vehicle. This sensor data can include, but is not limited to, GPS data. The detected location of the vehicle is then passed to block **406.**

In block **404,** an object is detected within proximity of the vehicle. This detection is made based on sensor data output from an object detector (e.g., object detector **260** of FIG. 2) or a camera (e.g., camera **262** of FIG. 2) of the vehicle. Information about the detected object is passed to block **406.** This information includes, but is not limited to, a speed of the object and/or a direction of travel of the object.

In block **406,** a vehicle trajectory is generated using the information from blocks **402** and **404.** Techniques for determining a vehicle trajectory are well known in the art, and therefore will not be described herein. Any known or to be known technique for determining a vehicle trajectory can be used herein without limitation. In some scenarios, the vehicle trajectory **420** is determined based on the location information from block **402,** the object detection information from block **404,** and map information **428** (which is pre-stored in a data store of the vehicle). The vehicle trajectory **420** represents a smooth path that does not have abrupt changes that would otherwise provide passenger discomfort. The vehicle trajectory **420** is then provided to block **408.**

In block **408,** a steering angle and velocity command is generated based on the vehicle trajectory **420.** The steering angle and velocity command is provided to block **410** for vehicle dynamics control.

Notably, the present solution augments the above-described vehicle trajectory planning process **400** of blocks **402-410** with an additional supervisory layer process **450.** The additional supervisory layer process **450** optimizes the vehicle trajectory for the most likely behavior of the objects detected in block **404,** but nonetheless maintains operational requirements if worst-case behaviors occurs. This additional supervisory layer process **450** is implemented by blocks **412-418, 452, 454.**

As shown in FIG. 4, an object classification is performed in block **404** to classify the detected object into one of a plurality of classes and/or sub-classes. The classes can include, but are not limited to, a vehicle class and a pedestrian class. The vehicle class can have a plurality of vehicle sub-classes. The vehicle sub-classes can include, but are not limited to, a bicycle sub-class, a motorcycle sub-class, a skateboard sub-class, a roller blade sub-class, a scooter sub-class, a sedan sub-class, an SUV sub-class, and/or a truck sub-class. The object classification is made based on sensor data output from an object detector (e.g., object detector **260** of FIG. 2) and/or a camera (e.g., camera **262** of FIG. 2) of the vehicle. Techniques for classifying objects based on sensor data and/or imagery data are well known in the art, and therefore will not be described herein. Information **430** specifying the object's classification is provided to block **412,** in addition to the information **432** indicating the object's actual speed and direction of travel.

Block **412** involves determining one or more possible object trajectories for the object detected in **404.** The possible object trajectories can include, but are not limited to, a trajectory defined by the object's actual speed (e.g., 1 mile per hour) and actual direction of travel (e.g., west). The one or more possible object trajectories **422** is(are) then passed to block **414.**

In the case that two or more possible object trajectories are determined, then **412** may optionally also involve selecting one of the possible object trajectories which provides a worst-case collision scenario for the AV. This determination is made based on information **432** indicating the AV's actual speed and direction of travel. The selected possible object trajectory is then passed to block **414,** instead of all the possible object trajectories determined in **412.**

In block **414,** a collision check is performed for each of the possible object trajectories **422** passed to block **414.** The collision check involves determining whether there is a threshold probability that a collision will occur between the vehicle and the object. Such a determination is made by first determining if the vehicle trajectory **420** and a given possible object trajectory **422** intersect. If the two trajectories **420, 422** do intersect, then a predicted time at which a collision would occur if the two trajectories are followed is determined. The predicted time is compared to a threshold value (e.g., 1 second). If the predicted time is equal to or less than the threshold value, then a determination is made as to whether the collision can be avoided if (a) the vehicle trajectory is followed by the AV and (b) any one of a plurality of dynamically generated maneuvers is performed in a pre-defined time period (e.g., *N* milliseconds). The dynamically generated maneuvers include, but are not limited to, a maneuver that comprises a braking command and that is determined based on the vehicle trajectory and a possible object trajectory.

If the two trajectories **420, 422** do not intersect, then the inference algorithm **452** is used to determine one or more inferred probabilities that unfavorable outcome(s) will result given current circumstance. The unfavorable outcomes can include, but are not limited to, a collision and/or a driving policy violation. The inferred probability(ies) of outcome(s) is(are) provided to block **416.** At block **416,** each inferred probability is compared to a threshold value. If the inferred probability is less than or equal to the threshold value, then the AV is caused to follow the vehicle trajectory. Otherwise, the AV is caused to perform a particular behavior or maneuver to eliminate or minimize the possibility that the unfavorable outcome will occur (e.g., turn, decelerate, change lanes, etc.). The behavior or maneuver can include, but is not limited to, a cautious maneuver (e.g., mildly slow down such as by 5-10 mph). Techniques for causing an AV to take a cautious maneuver such as slowing down are well known in the art. For example, a preservation control action command is generated as shown by **416,** and used to adjust or otherwise modify the vehicle trajectory at **408** prior to being passed to block **410.** The vehicle trajectory can be adjusted or otherwise modified to cause the vehicle to decelerate, cause the vehicle to accelerate, and/or cause the vehicle to change its direction of travel.

### Illustrative Methods

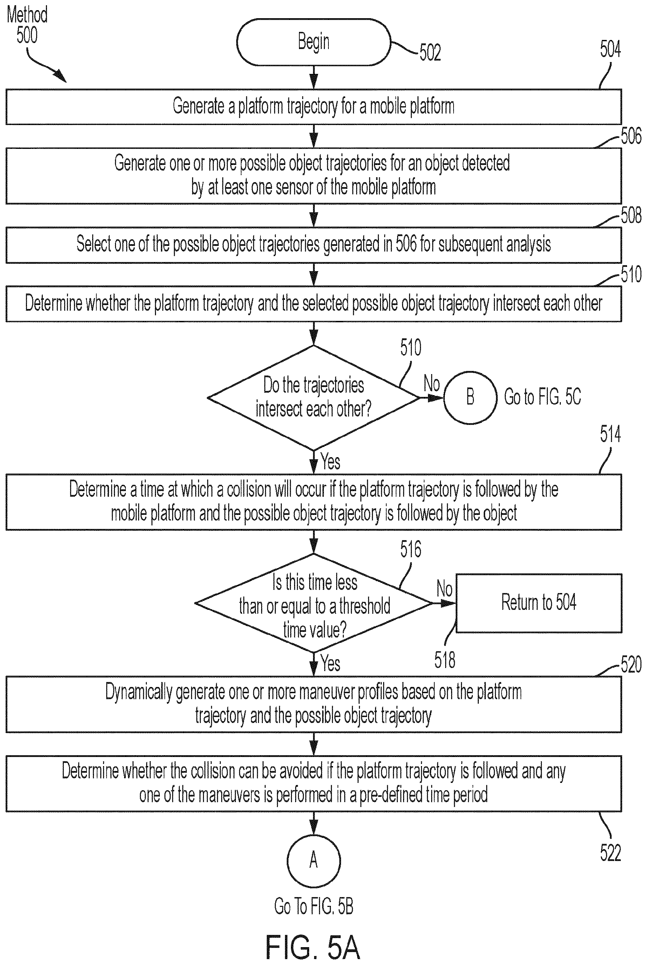

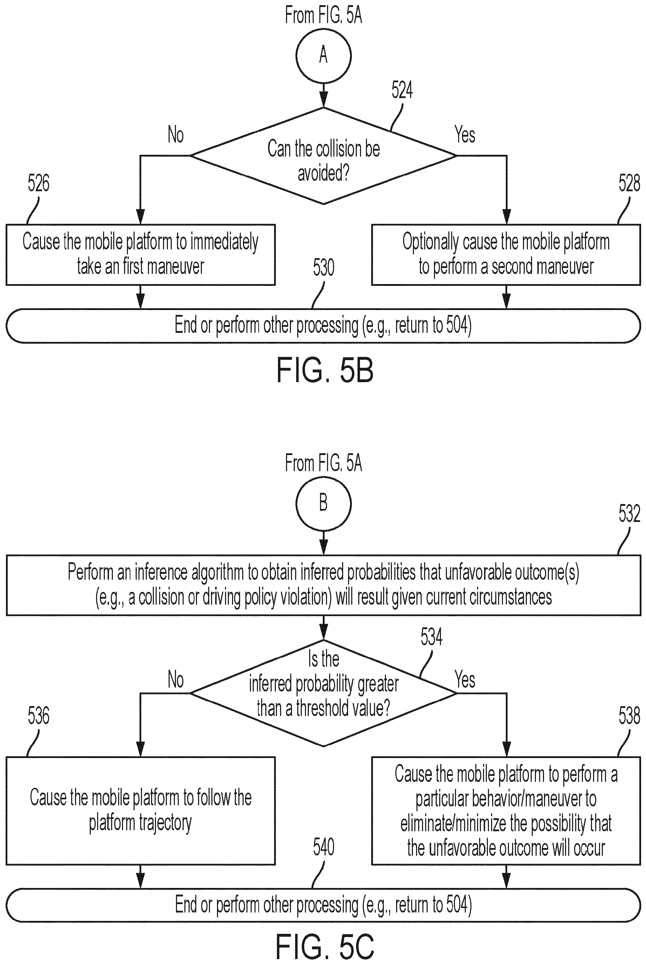

Referring now to FIG. 5, there is provided a flow diagram of an illustrative method **500** for operating a mobile platform (e.g., vehicle **102i** of FIG. 1). At least a portion of method **500** may be performed by an on-board computing device (e.g., on-board computing device **220** of FIG. 2) of the mobile platform. Method **500** is performed for each object (e.g., vehicle **102₂** of FIG. 1, cyclist **104** of FIG. 1, and/or pedestrian **106** of FIG. 1) that has been detected to be within a distance range from the vehicle at any given time.

Method **500** comprises a plurality of operations **502-540.** The present solution is not limited to the order of operations **502-540** shown in FIG. 4. For example, the operations of FIG. 5C can be performed in parallel with the operations of **504-540,** rather than responsive to a decision that two trajectories do not intersect each other as shown in FIG. 5.

As shown in FIG. 5A, method **500** begins with **502** and continues with **504** where a platform trajectory (e.g., vehicle trajectory **420** of FIG. 4) for the mobile platform is generated. The platform trajectory represents a smooth path that does not have abrupt changes that would otherwise provide passenger discomfort. Techniques for determining a vehicle trajectory are well known in the art. In some scenarios, the platform trajectory is determined based on location information generated by a location sensor (e.g., location sensor **248** of FIG. 2) of the mobile platform, object detection information generated by at least one object detector (e.g., object detector **260** of FIG. 2) of the mobile platform, images captured by at least one camera (e.g., camera **262** of FIG. 2) of the mobile platform, and map information stored in a memory (e.g., memory **312** of FIG. 3) of the mobile platform. In other scenarios, lane information is used as an alternative to or in addition to the location information and/or map information.

Once the vehicle trajectory is generated, method **500** continues with **506** where one or more possible object trajectories (e.g., possible object trajectories **422** of FIG. 4) are determined for an object (e.g., vehicle **102₂**, cyclist **104** or pedestrian **106** of FIG. 1) detected by at least one sensor (e.g., sensor **260** or camera **262** of FIG. 2) of the mobile platform. The possible object trajectories can include, but are not limited to, a trajectory defined by the object's actual speed (e.g., 1 mile per hour) and actual direction of travel (e.g., west).

Next in **508,** one of the possible object trajectories is selected for subsequent analysis. A determination is made in **510** as to whether the platform trajectory generated in **504** and the possible object trajectory selected in **508** intersect each other. If the two trajectories do intersect each other **[510:YES],** then method **500** continues to **514** where a time value is determined. This time value represents a time at which a collision will occur if the vehicle trajectory is followed by the mobile platform and the possible object trajectory is followed by the object. The time value determined in **514** is then compared to a threshold time value, as shown by **516.** The threshold time value is selected in accordance with a given application (e.g., one or more seconds). If the time value is greater than the threshold time value **[516:NO],** then **518** is performed where method **500** returns to **504.** If the time value is equal to or less than the threshold time value **[516:YES],** then method **500** continues with **520-522. 520-522** involve: dynamically generating one or more maneuver profiles based on the vehicle trajectory and the possible object trajectory; and determine whether the collision can be avoided if the vehicle trajectory is followed by the mobile platform and any one of the maneuvers is performed in a pre-defined time period (e.g., ***N*** milliseconds). Upon completing **522,** method **500** continues with **524** of FIG. 5B. If the collision cannot be avoided in the pre-defined time period **[524:NO],** then **526** is performed where the mobile platform is caused to immediately take a first maneuver (e.g., quickly deceleration and/or veer). Otherwise **[524:YES], 528** is performed where the mobile platform is optionally caused to perform a second different maneuver (e.g., mildly slow down). Subsequently, **530** is performed where method **500** ends or other processing is performed.

If the two trajectories do not intersect each other **[510:NO],** then method **500** continues to **532** of FIG. 5C. In **532,** an inference algorithm is performed to obtain inferred probabilities that unfavorable outcome(s) will result given current circumstances. The unfavorable outcomes can include, but are not limited to, a collision and/or a driving policy violation. When a threshold inferred probability exists **[534:YES],** the mobile platform is caused to perform a particular behavior or maneuver to eliminate or minimize the possibility that the unfavorable outcome will occur. For example, the mobile platform is caused to move along a path such that it remains a given distance from a particular object (e.g., pedestrian **106** of FIG. 1). Otherwise **[534:NO],** the mobile platform is caused to follow the platform trajectory. Subsequently, **540** is performed where method **500** ends or other processing is performed.

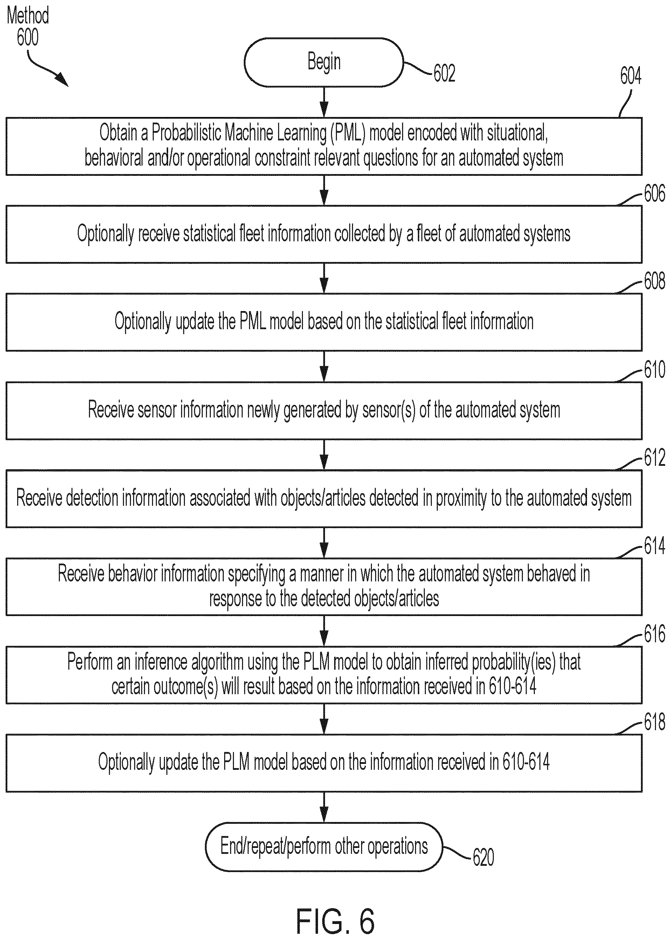

Referring now to FIG. 6, there is provided a flow diagram of an illustrative method **600** for generating inferred probability(ies) that certain outcome(s) will result based on various information. Method **600** can be performed in block **532** of FIG. 5.

As shown in FIG. 6, method **600** begins with **602** and continues with **604** where a probabilistic machine learning model is obtained from a datastore (e.g., datastore **112** of FIG. 1 or memory **312** of FIG. 3). The probabilistic machine learning model comprises a manually defined structure and machine learned content. The probabilistic machine learning model is encoded with situational questions, behavioral questions and/or operational constraint relevant questions for an automated system (e.g., mobile platform **102₁** of FIG. 1).

The term "situational question" refers to a question that facilitates an understanding of how probably is it that the automated system is experiencing a given situation at the present time, and/or how probable a certain outcome will result given a current situation of an automated system. The given situation can be described in terms of a perceived environment and/or internal system states. For example, a situational question can include: what is the probability that the automated system is passing at less than fifty centimeters cm from a pedestrian; what is the probability that the automated system is pass close to a pedestrian and wants to accelerate over fifty kilometers per hour; what is the probability that the automated system is perceiving a bicycle with a perception confidence under twenty percent and correcting the initial bicycle detection into an actual motorcycle detection; or what is the probability that the operational requirement or driving management threshold (e.g., stay at least ten feet from a pedestrian) will be violated or exceeded in the immediate future based on a current driving situation. The term "behavioral question" refers to a question that facilitates an understanding of what action(s) would need to be performed by the automated system to provide a certain outcome or eliminate/minimize the chances of an unfavorable outcome. For example, a behavioral question can include what action would reduce the chance of an unfavorable outcome of the current situation. The term "operational constraint relevant question" refers to a question that facilitates an understanding of what actions would lead to (i) violation of an operational policy or rule and/or (ii) exceeding a driving management threshold or other rule. For example, an operational constraint relevant question can include what is the probability that the next sensor update from sensor will lead to an avoidance or abrupt maneuver, and/or will the next sensor updates from a given sensor significantly contribute to the probability of initiating a braking or abrupt maneuver.

Next in optional blocks **606-608,** the automated system receives statistical fleet information collected by a fleet of automated systems and uses the same to update the probabilistic machine learning model or to actively control a fleet of automated systems (e.g., autonomous vehicles) by coordinating vehicle missions from a remote station. The statistical fleet information can include, but is not limited to, information specifying frequencies of detecting a specific situation in a specific geographic area (e.g., kids crossing road), information indicating how often an automated system incorrectly assigns a low probability of occurrence to a specific situation that occurs relatively often, information that is useful for detecting when an automated system continues to operate in a specific situation in which the automated system should not have operated, and/or information indicating inconsistencies or discrepancies between perception confidences and actual environmental circumstances (e.g., indicating what is occluded).

In **610,** the automated system receives sensor information generated by sensor(s). The sensor information can include, but is not limited to, images, LiDAR datasets, sonar data, and/or radar data. The sensor(s) can be local to the automated system or remote from the automated system. The sensor information can be received from a remote computing device (e.g., one of a dispatch operator for a self-driving service).

The automated system also receives detection information and/or behavior information as shown by **612-614.** The detection information is associated with objects or articles that were detected in proximity to the automated system. Such detection information is well known. The detection information can include, but is not limited to, an object classification, an object size, an object heading, an object location, and/or scene perception data. The behavior information specifies how the automated system behaved in response to the detected object(s) or article(s). For example, the behavior information can include information indicating that the automated system veered right and/or decelerated when a pedestrian was detected in proximity thereto while located in a given geographic area. The present solution is not limited in this regard.

In **616,** an inference algorithm is performed using the probabilistic machine learning model and the information received in **610-614.** The inference algorithm can include, but is not limited to, a junction tree algorithm. Junction tree algorithms are well known. The inference algorithm is performed to obtain inferred probability(ies) that certain outcome(s) will result based on current circumstances or a current situation. For example, the inference algorithm determines the probability that a collision will occur between the automated system and a detected object given the current circumstances/situation and/or the probability that an avoidance maneuver will be taken by the automated system given the current circumstances/situation. The present solution is not limited to the particulars of this example.

The information received in **610-614** can be used to update the probabilistic machine learning model as shown by **618.** This update can be done locally at the automated system and/or remotely at a remote computing device (e.g., computing device **110** of FIG. 1). In the latter case, the updated probabilistic machine learning model would need to be re-deployed to the automated system or a fleet to which the automated system belongs. Subsequently, **620** is performed where method **600** ends, at least some of the method **600** is repeated, or other operations are performed.

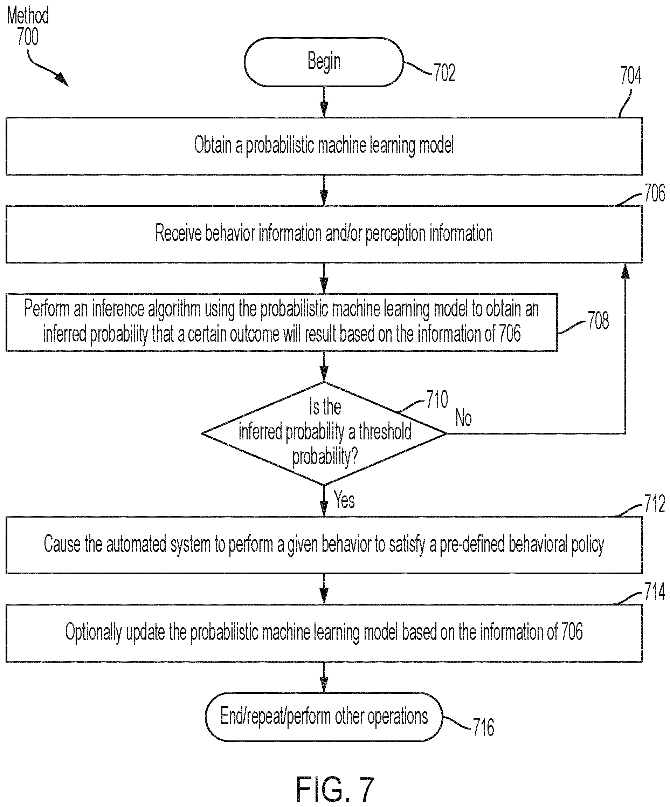

Referring now to FIG. 7, there is provided a flow diagram of an illustrative method **700** for operating an automated system (e.g., mobile platform **102₁** of FIG. 1). Method **700** can be performed by an internal computing device of the automated system (e.g., on-board computing device **220** of FIG. 2).

Method **700** begins with **702** and continues with **704** where the automated system obtains a probabilistic machine learning model (e.g., probabilistic machine learning model **128** of FIG. 1) from a datastore (e.g., datastore **112** of FIG. 1 or memory **312** of FIG. 3). The probabilistic machine learning model can be encoded with situational questions, behavioral questions and/or operational constraint relevant questions for the automated system. The probabilistic machine learning model can include, but is not limited to, a Bayesian network model with a pre-defined structure or a neural network with learned structure and explicit semantics.

Next in **706,** the automated system receives behavior information and/or perception information. The behavior information specifies a manner in which the automated system was to theoretically behave or actually behaved in response to detected environmental circumstances. The perception information indicates errors in a perception of a surrounding environment made by the automated system. For example, the perception information can include a statistical error value indicating that the automated system erroneously detected and/or estimated a state of a moving object one or more times. The present solution is not limited in this regard.

An inference algorithm is performed in **708** by the automated system. The inference algorithm can include, but is not limited to, junction tree algorithm. The inference algorithm uses the probabilistic machine learning model to obtain at least one inferred probability that a certain outcome (e.g., a collision) will result based on the behavior information and/or the perception information. A determination is made as to whether the inferred probability is a threshold probability. This determination can be made, for example, by comparing the inferred probability to a threshold value. The inferred probability is considered a threshold probability when it is equal to or greater than the threshold value. If the inferred probability is not considered a threshold probability **[710:NO],** then method **700** returns to **706.**

If the inferred probability is considered a threshold probability **[710:YES],** then method **700** continues with **712** where the automated system is caused to perform a given behavior to satisfy a pre-defined behavioral policy (e.g., remain at all times more than ten feet from a pedestrian). The given behavior can include, but is not limited to, a driving behavior or other behavior. The driving behavior can include, but is not limited to, turning, accelerating, decelerating, changing lanes, changing paths of travel, changing trajectory, veering, and/or performing a maneuver. The other behavior can include, but is not limited to, collecting data.

The information of **706** can be used to update the probabilistic machine learning model as shown by **714.** Subsequently, **716** is performed where method **700** ends, at least some of the method **700** is repeated, or other operations are performed.

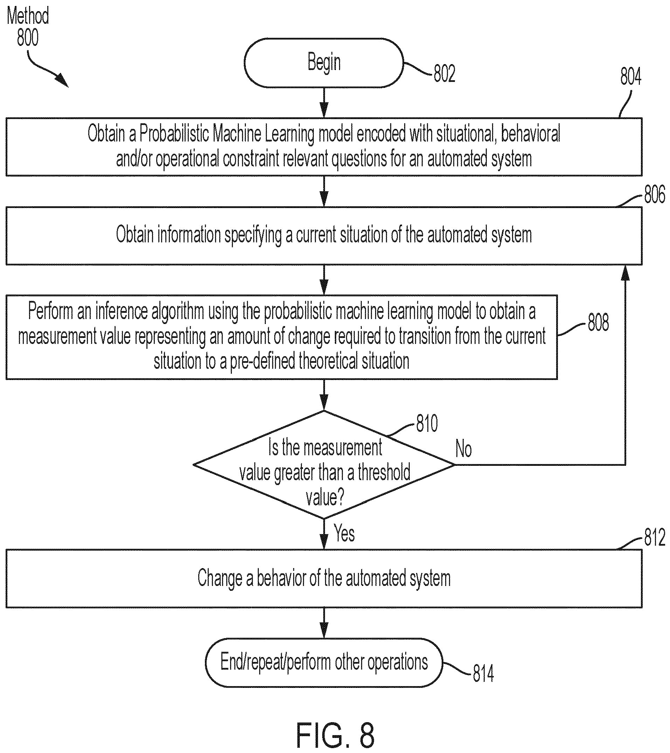

Referring now to FIG. 8, there is provided a flow diagram of an illustrative method **800** for operating an automated system (e.g., mobile platform **102₁** of FIG. 1). Method **800** can be performed by an internal computing device of the automated system (e.g., on-board computing device **220** of FIG. 2).

As shown in FIG. 8, method **800** begins with **802** and continues with **804** where the automated system is provided, e.g., it obtains, a probabilistic machine learning model (e.g., probabilistic machine learning model **128** of FIG. 1) from a datastore (e.g., datastore **112** of FIG. 1 or memory **312** of FIG. 3). The probabilistic machine learning model can be encoded with situational questions, behavioral questions and/or operational constraint relevant questions for the automated system. The probabilistic machine learning model can include, but is not limited to, a Bayesian network model with a pre-defined structure or a neural network with learned structure and explicit semantics.

In **806,** the automated system is provided, e.g., it obtains information specifying a current situation of the automated system. This information can include, but is not limited to, images, LiDAR datasets, radar data, sonar data, location information (e.g., GPS data), and/or event log information (e.g., information specifying what operations or behaviors were performed by the automated system). The information can be provided or obtained from a local datastore (e.g., memory **312** of FIG. 3), a remote datastore (e.g., datastore **112** of FIG. 1) and/or an external device (e.g., another automated system).

An inference algorithm is performed by the automated system in **808.** The inference algorithm can include, but is not limited to, junction tree algorithm. The inference algorithm uses the probabilistic machine learning model to obtain a measurement value representing an amount of change required to transition from the current situation to a pre-defined theoretical situation. The measurement value can include, but is not limited to, an explicit distance-from-situation metric value.

If the measurement value is less than a threshold value **[810:NO],** then method **800** returns to **806.** In contrast, if the measurement value is equal to or greater than the threshold value **[810:NO],** then method **800** continues with **812** where the automated system changes its behavior. Subsequently, **814** is performed where method **800** ends or other operations are performed.

In some scenarios, the probabilistic machine learning model is updated (e.g., in method(s) **600, 700)** in accordance with the following process: log external and internal events in order to sample the underlying statistical distribution; recognize situations in the field; infer chance of unfavorable outcomes; deriving a representation of the automated system from automated system models and/or automated system observations; infer limits of automated system by performing what-if queries on a derived representation of the automated system; and convert requirements and test scenarios into queryable formats. The queries to the probabilistic machine learning model can be used by the automated system to match situations on which requirements apply in the field, test how well the automated system performed against the requirements, capture automated system performance and data beyond requirements, and answering various questions (e.g., How close was the current situation to the situations relevant for requirements or test scenarios?, Should the automated system record a given situation due to ambiguity, high chance of low ride quality, bad behavioral priors, or bad operational driver feedback in similar situations?, Should the behavior of the automated system be changes to, for example, slow down since the situation ambiguity or perception priors indicate risk (learned or common sense)?, Should the automated system invest more time in a specific field of view region (attentional reasoning)?). The updated probabilistic machine learning model can be re-deployed to the automated system(s) in the field and/or of a fleet.

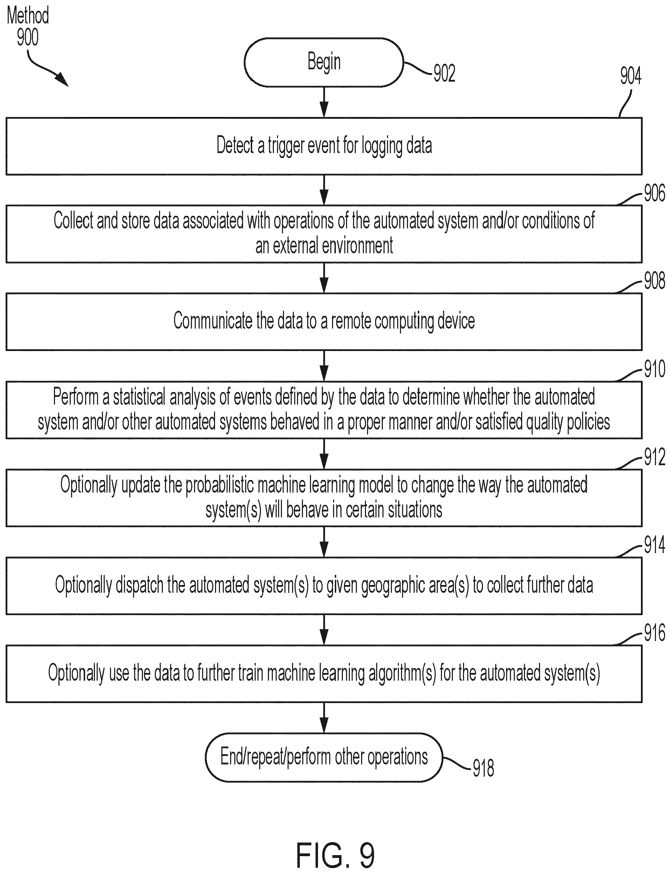

Referring now to FIG. 9, there is provided a flow diagram of an illustrative method **900** for operating a system (e.g., system **100** of FIG. 1) in a shadow mode. Method **900** begins with **902** and continues with **904** where a trigger event is detected for causing the logging of data. The term "trigger event" refers to detectable actions, system states and/or conditions existing while an automated system is operating. For example, a trigger event can include entering a driving mode, entering a maneuver execution mode, and/or observing specific objects in a surrounding environment. The present solution is not limited in this regard.

In response to the trigger event, method **900** continues with **906** where data is collected and stored in a datastore (e.g., memory **312** of FIG. 3). The data is associated with operations of the automated system (e.g., mobile platform **102₁** of FIG. 1) and/or conditions of an external environment. The data can include, but is not limited to, images, LiDAR data, sonar data, radar data, operational state data, operational mode data, task or event data, behavior data, temperature data, humidity data, scene perception data, object detection data, and/or platform trajectory data. The collected data is communicated to a remote computing device (e.g., computing device **110** of FIG. 1), as shown by **908.**

At the remote computing device, a statistical analysis is performed. The statistical analysis involves analyzing events defined by the data to determine whether the automated system and/or other automated systems (e.g., in a fleet) behaved in a proper manner and/or satisfied quality policies. The quality policies can include, but are not limited to, operational policies or other driving management thresholds (e.g., all automated systems should not exceed a certain speed), fleet policies (e.g., all automated systems should provide a certain level of passenger comfort), and/or company policies (e.g., all automated systems of the company should not enter into a given geographic area and/or should not be used in certain manners).

The remote computing device can then perform various operations as shown by optional **912-916** based on results of the statistical analysis. The operations include, but are not limited to, updating the probabilistic machine learning model to change the way the automated system(s) will behave in certain situations, dispatch the automated system(s) to given geographic area(s) to collect further data, and/or use the data to further train machine learning algorithm(s) (e.g., perception algorithms and/or object detection algorithms) for the automated system(s). Subsequently, **918** is performed where method **900** ends, at least some of method **900** is repeated, or method **900** continues with other operations.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims and their equivalents.

In the following, further beneficial aspects of the subject-matter described herein are listed:
1. A computer-implemented method for operating an automated system, comprising:
   providing a probabilistic machine learning model encoded with at least one of the following categories of questions for the automated system: a situational question, a behavioral question and an operational constraint relevant question;
   providing (i) behavior information specifying a manner in which the automated system was to theoretically behave or actually behaved in response to detected environmental circumstances, or (ii) perception information indicating errors in a perception of a surrounding environment made by the automated system;
   performing an inference algorithm using the probabilistic machine learning model to obtain at least one inferred probability that a certain outcome will result based on at least one of the behavior information and the perception information; and
   in response to the at least one inferred probability being a threshold probability, causing the automated system to perform a given behavior to satisfy a pre-defined behavioral policy.
2. The method according to aspect 1, wherein the probabilistic machine learning model comprises a Bayesian network model with a pre-defined structure or a neural network with learned structure and explicit semantics.
3. The method according to any one of the preceding aspects, further comprising updating the probabilistic machine learning model based on at least one of the behavior information and the perception information.
4. The method according to any one of the preceding aspects, wherein the automated system comprises an autonomous vehicle.
5. The method according to any of the above aspects, wherein the given behavior is a driving maneuver.
6. The method according to any one of the preceding aspects, wherein the given behavior comprises capturing data.
7. The method according to any one of the preceding aspects, wherein a computing device that is performing the method is external to the automated system.
8. The method according to any one of the preceding aspects, further comprising performing operations to control behaviors of a plurality of automated systems in a fleet.
9. The method according to any one of the preceding aspects, further comprising controlling the automated system by (i) exchanging the probabilistic machine learning model between a plurality of automated systems, and (ii) having a computing device issue driving commands.
10. The computer-implemented method according to any one of the preceding aspects, wherein the inference algorithm comprises a junction tree algorithm.
11. A system, comprising:
   a processor that is configured (e.g., via programming instructions) to:
   provide a probabilistic machine learning model encoded with at least one of the following categories of questions for the automated system: a situational question, a behavioral questions and an operational constraint relevant question;
   provide (i) behavior information specifying a manner in which the automated system was to theoretically behave or actually behaved in response to detected environmental circumstances or (ii) perception information indicating errors in a perception of a surrounding environment made by the automated system;
   perform an inference algorithm using the probabilistic machine learning model to obtain at least one inferred probability that a certain outcome will result based on at least one of the behavior information and the perception information; and
   cause the automated system to perform a given behavior to satisfy a pre-defined behavioral policy, responsive to the at least one inferred probability being a threshold probability.
12. The system according to aspect 11, wherein the probabilistic machine learning model comprises a Bayesian network model with a pre-defined structure or a neural network with learned structure and explicit semantics.
13. The system according to aspect 11 or 12, wherein the processor is further configured to update the probabilistic machine learning model based on at least one of the behavior information and the perception information.
14. The system according to any one of aspects 11 to 13, wherein the automated system comprises an autonomous vehicle.
15. The system according to any one of aspects 11 to 14, wherein the given behavior is a driving maneuver.
16. The system according to any one of aspects 11 to 15, wherein the given behavior is a performance of a data collection operation.
17. The system according to any one of aspects 11 to 16, wherein the inference algorithm comprises a junction tree algorithm.
18. A computer program, or a storage medium storing the program, comprising programming instructions that when executed by a processor cause the processor to:
   provide a probabilistic machine learning model encoded with at least one of the following categories of questions for the automated system: a situational question, a behavioral question and an operational constraint relevant question;
   receive or obtain or provide (i) behavior information specifying a manner in which the automated system was to theoretically behave or actually behaved in response to detected environmental circumstances or (ii) perception information indicating errors in a perception of a surrounding environment made by the automated system;
   perform an inference algorithm using the probabilistic machine learning model to obtain at least one inferred probability that a certain outcome will result based on at least one of the behavior information and the perception information; and
   cause the automated system to perform a given behavior to satisfy a pre-defined behavioral policy, responsive to the at least one inferred probability being a threshold probability.
19. The computer program, or the storage medium according to aspect 18, wherein the probabilistic machine learning model comprises a Bayesian network model with a pre-defined structure or a neural network with learned structure and explicit semantics.
20. The computer program, or the storage medium according to aspect 18 or 19, wherein the programming instructions comprise instructions to update the probabilistic machine learning model based on at least one of the behavior information and the perception information.
21. The computer program, or the storage medium, according to any one of aspects 18 to 20, wherein the automated system comprises an autonomous vehicle.
22. A system comprising means for performing the steps of any of the preceding method aspects.
23. A computer program, or a computer readable storage medium storing the computer program, comprising programming instructions which when executed by one or more suitable processors cause any of the processors to perform the steps of any of the above method aspects.
24. The updated probabilistic machine learning model, or a data storage medium storing the model, as generated in the any one of the above method aspects 3 - 10.
25. Use of the probabilistic machine learning model as generated in any of the above method aspects 3 - 10 for operating and/or controlling an automated system.

## Claims

1. A computer-implemented method for operating an automated system, comprising:
providing a probabilistic machine learning model encoded with at least one of the following categories of questions for the automated system: a situational question, a behavioral question and an operational constraint relevant question;
providing (i) behavior information specifying a manner in which the automated system was to theoretically behave or actually behaved in response to detected environmental circumstances or (ii) perception information indicating errors in a perception of a surrounding environment made by the automated system;
performing an inference algorithm using the probabilistic machine learning model to obtain at least one inferred probability that a certain outcome will result based on at least one of the behavior information and the perception information; and
in response to the at least one inferred probability being a threshold probability, causing the automated system to perform a given behavior to satisfy a pre-defined behavioral policy.

2. The computer-implemented method according to claim 1, wherein the probabilistic machine learning model comprises a Bayesian network model with a pre-defined structure or a neural network with learned structure and explicit semantics.

3. The computer-implemented method according to any one of the preceding claims, further comprising updating the probabilistic machine learning model based on at least one of the behavior information and the perception information.

4. The computer-implemented method according to any one of the preceding claims, wherein the automated system comprises an autonomous vehicle.

5. The computer-implemented method according to any one of the preceding claims, wherein the given behavior is a driving maneuver.

6. The computer-implemented method according to any one of the preceding claims, wherein the given behavior comprises capturing data.

7. The computer-implemented method according to any one of the preceding claims, wherein a computing device performing the method is external to the automated system.

8. The computer-implemented method according to any one of the preceding claims, further comprising performing operations to control behaviors of a plurality of automated systems in a fleet.

9. The computer-implemented method according to any one of the preceding claims, further comprising controlling the automated system by (i) exchanging the probabilistic machine learning model between a plurality of automated systems, and (ii) having the a computing device issue driving commands.

10. The computer-implemented method according to any one of the preceding claims, wherein the inference algorithm comprises a junction tree algorithm.

11. A system comprising means for performing the steps of any of the preceding method claims.

12. A computer program, or a computer readable storage medium storing the computer program, comprising programming instructions which when executed by one or more suitable processors cause any of the processors to perform the steps of any of the above method claims.

13. The updated probabilistic machine learning model, or a data storage medium storing the model, as generated in any of the above method claims 3 - 10.

14. Use of the probabilistic machine learning model as generated in any of the above method claims 3 - 10 for operating and/or controlling an automated system.
